Europäisches Patentamt

European Patent Office

Office européen des brevets

(11) Publication number: **0 617 307 A2**

# EUROPEAN PATENT APPLICATION

(21) Application number: **94104437.2**

(22) Date of filing: **21.03.94**

(51) Int. Cl.5: **G02B 26/10**

(30) Priority: **24.03.93 JP 89375/93**

(43) Date of publication of application:
**28.09.94 Bulletin 94/39**

(84) Designated Contracting States:
**DE FR GB IT SE**

(71) Applicant: **NIPPON AVIONICS CO. LTD.**
**15-1, Nishishinbashi 1-chome**
**Minato-ku**
**Tokyo 105 (JP)**

(72) Inventor: **Tsuchimoto, Kouzo, c/o Nippon**
**Avionics Co., Ltd.**
**15-1, 1-chome,**
**Nishi-Shinbashi**
**Minato-ku, Tokyo (JP)**

(74) Representative: **von Samson-Himmelstjerna,**
**Friedrich R., Dipl.-Phys. et al**
**SAMSON & PARTNER**
**Widenmayerstrasse 5**
**D-80538 München (DE)**

(54) **Optical scanning apparatus.**

(57) An optical scanning apparatus includes an optical scanning mirror, a reflecting mirror, and a lens system. The optical scanning mirror has a first reflecting surface for reflecting an incident beam and a second reflecting surface for reflecting the incident beam and causing the incident beam to emerge. The optical scanning mirror synchronously changes angles of the first and second reflecting surfaces in a predetermined direction. The reflecting mirror is arranged in an optical path between the first and second reflecting surfaces to form a double-reflection path. The lens system is arranged in the double-reflection path to cause a beam reflected by the first reflecting surface to be incident on the second reflecting surface at a predetermined angle.

FIG.1

## Background of the Invention

The present invention relates to an optical scanning apparatus using an optical scanning mirror and, more particularly, to an optical scanning apparatus capable of increasing a scanning angle.

As is well known, an optical scanning apparatus using an optical scanning mirror for changing the direction of a reflected beam with respect to an incident beam changes the angle of the scanning mirror to perform predetermined scanning based on a principle of changing the angle of a reflected beam by $2\delta$ upon a change in angle of a reflecting surface by a given angle $\delta$ with respect to the incident beam. Various types of optical scanning mirrors are available in accordance with forms for mechanically changing the angle of the scanning mirror.

More specifically, the optical scanning mirrors are a polyhedral rotary mirror (e.g., a mirror having reflecting surfaces whose angles are equal to or different from each other) for changing the angle or angles of a plurality of scanning mirrors in one direction, a tuning fork for changing the angle of a scanning mirror set at each distal end face of a U-shaped fork by vibrations, a resonant scanner for swinging a scanning mirror by reciprocally pivoting a rotating shaft mounted with the scanning mirror in a plane including the rotating shaft, and the like.

An optical scanning apparatus preferably has a large scanning angle because it is used as an image pickup unit in an apparatus for acquiring, e.g., an infrared thermal imagery. However, the scanning angle is generally small, and it is difficult to increase it because the optical scanning mirror mechanically changes the angle of the scanning mirror.

More specifically, for example, the scanning angle of the polyhedral rotary mirror depends on a mechanical rotation angle. For example, a regular hexahedral mirror restores its original shape upon rotation of 60°, and the limit of the mechanical scanning angle is 60°. To obtain a larger scanning angle, the number of reflecting surfaces must be reduced. This causes an increase in air resistance and degradation of scanning efficiency. For example, a regular trihedral mirror has a maximum scanning angle of 120°, and its air resistance is much higher than that of the regular hexahedral mirror. The number of scanning cycles per revolution of the regular trihedral mirror is half that of the regular hexahedral mirror, thereby degrading the scanning efficiency.

In a system using one scanning mirror, such as a tuning fork or a resonant scanner, the scanning angle can be increased by increasing an angle of change in the scanning mirror or utilizing multiple reflection. When a large scanning mirror or high-speed scanning is required, a dynamic load acting on the scanning mechanism undesirably increases to pose a mechanical problem.

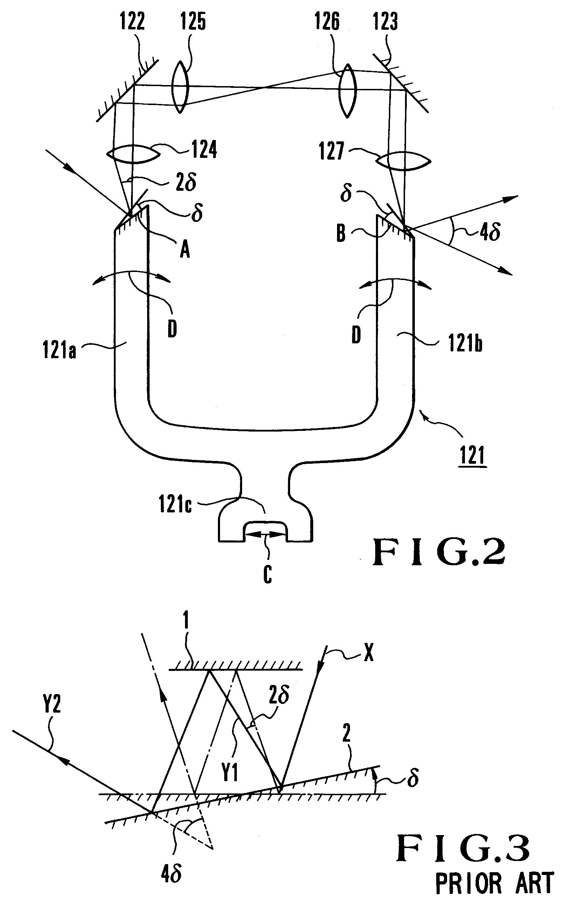

When multiple reflection is utilized, for example, a scanning mirror 2 is changed from a parallel state indicated by a chain double-dashed line to have an angle $\delta$ with respect to a stationary plane mirror 1, as shown in Fig. 3. An incident ray X is repeatedly reflected between the stationary plane mirror 1 and the scanning mirror 2. The directions of rays Y1, Y2,... reflected by the scanning mirror 2 are changed by $2\delta$ for the first reflection and $4\delta$ for the second reflection with respect to the directions of rays reflected when the stationary plane mirror 1 is parallel to the scanning mirror 2. When such multiple reflection is utilized, n-time reflection on the scanning mirror provides a scanning angle $2n$ times the mechanical change angle $\delta$ in principle.

When the multiple reflection, however, is utilized, the second and subsequent reflection points are shifted with changes in scanning angle, thus undesirably requiring a large scanning mirror.

To obtain a large scanning angle, the shift amount of the reflection point increases to increase a dynamic load as in the above method of increasing the change angle of the scanning mirror.

## Summary of the Invention

It is an object of the present invention to provide an optical scanning apparatus capable of increasing a scanning angle without increasing a mechanical change angle of an optical scanning mirror.

In order to achieve the above object of the present invention, there is provided an optical scanning apparatus comprising an optical scanning mirror, having a first reflecting surface for reflecting an incident beam and a second reflecting surface for reflecting the incident beam and causing the incident beam to emerge, for synchronously changing angles of the first and second reflecting surfaces in a predetermined direction, a reflecting mirror, arranged in an optical path between the first and second reflecting surfaces, for forming a double-reflection path, and a lens system, arranged in the double-reflection path, for causing a beam reflected by the first reflecting surface to be incident on the second reflecting surface at a predetermined angle.

## Brief Description of the Drawings

Fig. 1 is a view showing the principle of an optical scanning apparatus according to the first embodiment of the present invention;

Fig. 2 is a view showing the principle of an optical scanning apparatus according to the second embodiment of the present invention; and
Fig. 3 is a view for explaining the principle of increasing a scanning angle by multiple reflection in a conventional apparatus.

DESCRIPTION OF THE PREFERRED EMBODIMENTS

The preferred embodiments of the present invention will be described below with reference to the accompanying drawings.

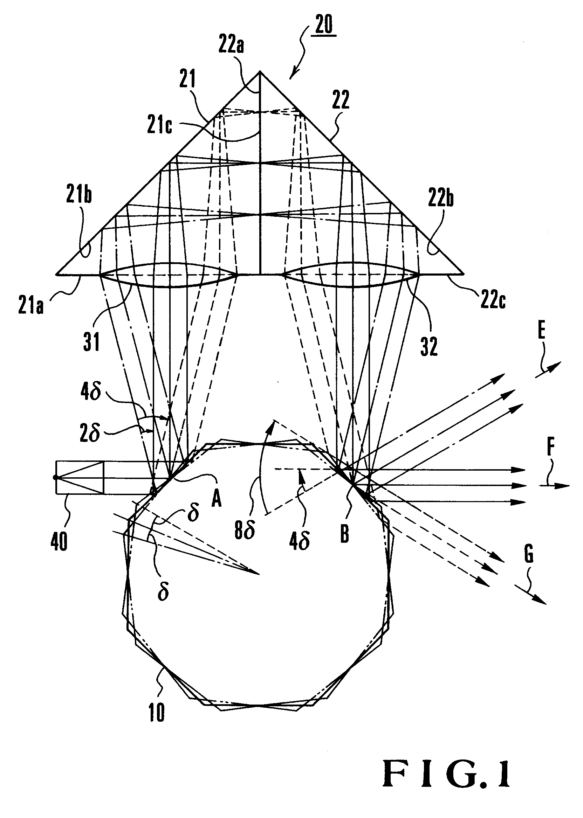

Fig. 1 shows an optical scanning apparatus according to the first embodiment of the present invention. The apparatus of the first embodiment utilizes a regular octahedral mirror 10 as an optical scanning mirror. States obtained by pivoting the regular octahedral mirror 10 three times by a predetermined angle δ each are superposed in Fig. 1. A reflecting surface A of the eight reflecting surfaces serves as an incident surface, and a reflecting surface B serves as an exit surface.

A reflecting mirror 20 has a cross-sectional shape of an isosceles triangle and is constituted by bonding two right-angle mirrors 21 and 22 respectively having incident surfaces 21a and 22a, reflecting surfaces 21b and 22b, and exit surfaces 21c and 22c. The incident surface 21a of the right-angle mirror 21 receives a beam reflected by the reflecting surface A of the regular octahedral mirror 10, and the exit surface 22c of the right-angle mirror 22 causes an exit beam to emerge to the reflecting surface B of the regular octahedral mirror 10. Convex lenses 31 and 32 each having a predetermined focal length are disposed as focusing means at the incident surface 21a of the right-angle mirror 21 and the exit surface 22c of the right-angle mirror 22, respectively. Reference numeral 40 denotes a laser source for emitting a laser beam. The laser beam from the laser source 40 is incident as a parallel beam having a predetermined diameter on the reflecting surface A of the regular octahedral mirror 10 and reflected toward the reflecting mirror 20.

In the above arrangement, the laser beam from the laser source 40 and reflected by the reflecting surface A of the regular octahedral mirror 10 is incident on the incident surface 21a of the right-angle mirror 21. In this case, the laser beam is focused by the lens 31 and guided inside the reflecting mirror 20. The laser beam is reflected by the reflecting surface 21b located deep inside the reflecting mirror 20. The laser beam is incident on the incident surface 22a of the right-angle mirror 22 to be almost parallel to the incident surface 21a. The laser beam is then reflected by the reflecting surface 22b located deep inside the reflecting mirror 20. The laser beam is focused by the lens 32 at the exit surface 22c of the right-angle mirror 22 and incident on the reflecting surface B of the regular octahedral mirror 10. The laser beam is then reflected by the reflecting surface B and emerges as a scanning laser beam corresponding to the rotation angle of the regular octahedral mirror 10. The two lenses 31 and 32 constitute a telescope. The angle change direction of the reflecting surface A is the same as that of the reflecting surface, so that the telescope serves as an inverted telescope.

The relationship between the rotation angle of the regular octahedral mirror 10 and the scanning angle of the scanning laser beam will be described in detail below. In the first rotational position of the regular octahedral mirror 10, a laser beam from the laser source 40 is reflected by the reflecting surface A of the regular octahedral mirror 10 and serves as a reflected beam as indicated by a chain line in Fig. 1. The reflected beam passes through the lens 31 portion corresponding to the outer portion of the reflecting mirror 20 and is incident on the reflecting mirror 20. This beam passes through the lens 32 portion corresponding to the outer portion of the reflecting mirror and emerges outside the reflecting mirror 20. The exit beam from the reflecting mirror 20 is reflected by the reflecting surface B of the regular octahedral mirror 10 and emerges in a direction indicated by an arrow E. When the regular octahedral mirror 10 is rotated by an angle δ, a laser beam from the laser source 40 is reflected by the reflecting surface A of the regular octahedral mirror 10 at a scanning angle 2δ and serves as a reflected beam indicated by a solid line in Fig. 1. This reflected beam passes through the center of the lens 31 and is incident on the reflecting mirror 20. The beam then passes the central portion of the lens 32 and emerges from the reflecting mirror 20. The exit beam from the reflecting mirror 20 is reflected by the reflecting surface B of the regular octahedral mirror 10 at a scanning angle 4δ and emerges in a direction indicated by an arrow F. When the regular octahedral mirror 10 is further rotated by the angle δ, i.e., by 2δ from the initial angular position, a laser beam from the laser source 40 is reflected by the reflecting surface A of the regular octahedral mirror 10 at a scanning angle 4δ and serves as a reflected beam indicated by a solid line. This beam passes through the lens 31 portion corresponding to the inner portion of the reflecting mirror 20 and is incident on the reflecting mirror 20. The beam then passes through the lens 32 portion corresponding to the inner portion of the reflecting mirror 20 and emerges from the reflecting mirror 20. The exit beam from the reflecting mirror 20 is reflected by the reflecting surface B of the regular octahedral mirror 10 at a scanning angle 8δ and emerges in a direction indicated by an arrow G.

In summary, when the beams reflected by the reflecting surface A of the regular octahedral mirror 10 are returned to the reflecting surface B of the regular octahedral mirror 10 by an optical system constituted by a combination of the reflecting mirror 20 and the lenses 31 and 32 constituting the inverted telescope, all the beams reflected by the reflecting surface A at the corresponding scanning angles are focused on the reflecting surface B. At this time, since the incident angle change direction on the reflecting surface B is the same as the rotational direction of the regular octahedral mirror 10 constituting the scanning mirror by means of the inverted telescope, the scanning angle of the beam reflected by the reflecting surface B is always twice the scanning angle on the reflecting surface A, provided that the inverted telescope has a magnification of 1. A shift in reflecting point can be eliminated due to the operation of the optical system, unlike the conventional case. That is, according this embodiment, the shift in reflection point can be eliminated. In addition, the scanning angle can increase without increasing the mechanical scanning angle. In addition, the scanning angle can further increase due to an amplification effect by the magnification of the telescope.

The laser beams on the reflecting surfaces A and B of the regular octahedral mirror 10 are illustrated in an enlarged manner in Fig. 1. This indicates that the rotary scanning mirror can be made compact because the scanning angle can be amplified by the optical system. In the illustrated embodiment, the diameter of a circumscribed circle for the regular octahedral mirror 10 is 40 mm, and the diameter of a parallel beam is 5 mm. The relationship between the rotation angle and the beam is also illustrated. In general, when a rotary scanning mirror is used, the rotation angle is limited by the diameter of the beam and the size and shape of the polyhedral mirror.

Fig. 2 shows an optical scanning apparatus according to the second embodiment of the present invention. The apparatus of the second embodiment uses a Y-shaped tuning fork 121 having forks 121a and 121b as an optical scanning mirror.

Reflecting surfaces A and B inclined in oppose directions at the same angle are formed on the distal end faces of the forks 121a and 121b of the tuning fork 121. When a proximal portion 121c of the tuning fork 121 is electromagnetically vibrated, as indicated by an arrow C, the forks 121a and 121b resonate each other on the same plane but in opposite directions, as indicated by a double-headed arrow D. As a result, the reflecting surfaces A and B are inclined at the same angle $\delta$ but in the opposite directions.

An optical system consisting of two plane mirrors 122 and 123 constituting a reflecting mirror and four lenses 124 to 127 constituting a telescope is arranged with respect to this tuning fork 121. A scanning angle $2\delta$ on the reflecting surface A is amplified as a scanning angle $4\delta$ on the reflecting surface B as in the first embodiment.

The telescope (124 to 127) serves as an erecting telescope unlike the first embodiment because the angle change directions of the two reflecting surfaces A and B are opposite to each other.

As can be readily estimated from the above description, a resonant scanner can be used as an optical scanning mirror. Although not illustrated, two resonant scanners are prepared and synchronously rotated. Although the angle change directions of the two scanning mirrors are opposite to each other to facilitate light beam incidence and emergence because the layout positions of the two scanning mirrors are physically determined in the tuning fork, the rotational direction of the rotating shafts of the two resonant scanners are the same or opposite.

In fine, the present invention is applicable to a conventional general scanning mirror. The inverted or erecting form is selected in accordance with whether the angle change directions of the two reflecting mirrors utilized in this scanning mirror are the same or opposite, thereby increasing the optical scanning angle. In the above description, the angular change amounts of the two reflecting mirrors are equal to each other, but can be different from each other.

The total scanning angle obtained by selectively changing the magnification of the telescope can be controlled. If the angular magnification of the telescope is defined as $\alpha$, the optical scanning angle $\theta$ in a double-reflection system constituted by a scanning mirror having the change angle $\delta$ is given as $\theta = 2\alpha\delta + 2\delta = 2\delta(\alpha + 1)$.

As has been described above, in an optical scanning apparatus according to the present invention, a beam reflected by one reflecting surface of a conventional general optical scanning mirror (e.g., a rotary polyhedral mirror, a tuning fork, or a resonant scanner) is incident on the other reflecting surface by an optical system constituted by a combination of a reflecting mirror and a telescope. That is, double-reflection can be realized by the above optical system. In a conventional scanning system having a limited scanning angle, the scanning angle can be easily and greatly increased. In other words, a necessary mechanical scanning angle can be reduced into 1/2 to obtain a given specific scanning angle. Therefore, the apparatus having the scanning mirror as the major component can be made compact, and its power consumption can be reduced.

## Claims

1. An optical scanning apparatus characterized by comprising:

   an optical scanning mirror (10), having a first reflecting surface (A) for reflecting an incident beam and a second reflecting surface (B) for reflecting the incident beam and causing the incident beam to emerge, for synchronously changing angles of said first and second reflecting surfaces in a predetermined direction;

   a reflecting mirror (29), arranged in an optical path between said first and second reflecting surfaces, for forming a double-reflection path; and

   a lens system (31, 32), arranged in the double-reflection path, for causing a beam reflected by said first reflecting surface to be incident on said second reflecting surface at a predetermined angle.

2. An apparatus according to claim 1, wherein said optical scanning mirror comprises a polyhedral rotary mirror, having a plurality of reflecting surfaces including said first and second reflecting surfaces, for changing angles of said plurality of reflecting surfaces in one direction upon rotation.

3. An apparatus according to claim 2, wherein said polyhedral rotary mirror comprises a regular octahedral mirror having eight reflecting surfaces, and said first and second reflecting surfaces are constituted by two reflecting surfaces adjacent to interpose one of the eight reflecting surfaces of said regular octahedral mirror therebetween.

4. An apparatus according to claim 1, wherein said optical scanning mirror comprises a Y-shaped tuning fork (121) having a pair of forks (121a, 121b) respectively having said first and second reflecting surfaces at distal ends thereof, said tuning fork being operated to change angles of said first and second reflecting surfaces in opposite directions upon a vibration.

5. An apparatus according to claim 1, wherein said lens system comprises a telescope constituted by at least two lenses and serving as an inverted or erecting telescope in accordance with whether angle change directions of said first and second reflecting surfaces of said optical scanning mirror are the same or opposite.

6. An apparatus according to claim 1, wherein said lens system comprises a telescope having a magnification $\alpha$, and an optical scanning angle $\theta$ in the double-reflection path at a mechanical change angle $\delta$ is given as $\theta = 2\alpha\delta + 2\delta = 2\delta(\alpha + 1)$.

7. An apparatus according to claim 6, wherein the magnification of said telescope is selectively settable, and the optical scanning angle $\theta$ is finely selected by changing the magnification of said telescope.

8. An apparatus according to claim 1, further comprising a laser source (40) for emitting a laser beam having a parallel beam having a predetermined diameter incident on said first reflecting surface of said optical scanning mirror, and wherein said reflecting mirror is constituted by a body obtained by bonding two right-angle mirrors (21, 22) to form the double-reflection path so as to set an optical path of a beam reflected by said first reflecting surface to be parallel to an optical path of a beam incident on said second reflecting surface, and said lens system is constituted by a pair of convex lenses located at an incident surface (21) and a reflecting surface (22c) of said reflecting mirror.

**FIG.1**

**F I G.2**

**F I G.3**
**PRIOR ART**